# EUROPÄISCHE PATENTSCHRIFT

(11) **EP 2 727 809 B1**
(45) Veröffentlichungstag und Bekanntmachung des Hinweises auf die Patenterteilung: **16.03.2016**
(21) Anmeldenummer: 13185538.9
(22) Anmeldetag: 23.09.2013
(51) Int. Cl.: B62M 6/45, B62J 27/00

(54) **Verfahren und Vorrichtung zum Schutz der Pedale eines Zweirads während einer Kurvenfahrt**
Method and apparatus for protecting the pedals of a two-wheeled vehicle during cornering
Procédé et dispositif de protection de la pédale d'un deux-roues dans un virage

(30) Priorität: 06.11.2012 DE 102012220182
(43) Veröffentlichungstag der Anmeldung: 07.05.2014
(73) Patentinhaber: ROBERT BOSCH GMBH, 70442 Stuttgart (DE)
(72) Erfinder: Rajapakse, Marco, 70378 Stuttgart (DE)

(56) Entgegenhaltungen:
- DE-A1-102009 054 756
- DE-A1-102011 082 086
- DE-A1-102011 082 088
- US-A1- 2011 095 623

## Beschreibung

Die Erfindung betrifft eine Vorrichtung, ein mit dieser Vorrichtung ausgestattetes Zweirad sowie ein Verfahren zur Ansteuerung des Motors eines motorangetriebenen Zweirads in Abhängigkeit der Erkennung einer Schräglage des Zweirads.

### Stand der Technik

Bei einer Kurvenfahrt mit einem pedalgetriebenen Zweirad, z.B. einem Fahrrad, ist üblicherweise darauf zu achten, dass sich das kurveninnere Pedal nicht im unteren Umkehrpunkt der Tretkurbel befindet, um ein aufsetzen oder schleifen des Pedals auf dem Boden zu verhindern.

Aus der Schrift DE 10 2009 054 756 A1, die als nächstliegender Stand der Technik angesehen wird, ist ein elektrisch betriebenes Zweirad bekannt, welches eine Kurvenfahrt erkennt und die Antriebsleistung entsprechend steuert. Hierzu ist ein Neigungssensor mit einer Steuereinheit verbunden, welches die Neigung des Zweirads zu einer Seite hin erfasst. Bei Überschreiten eines vorbestimmten Werts einer seitlichen Neigung reduziert die Steuereinheit die Antriebsleistung oder schaltet den elektrischen Antrieb ab.

Aus der Schrift DE 10 2004 060 292 A1 ist eine Neigungsermittlung für ein Motorrad bekannt, bei dem wenigstens zwei Drehratensensoren eingesetzt werden, um aus den so erfassten Drehraten den Wank- und/oder Nickwinkel des Motorrads zu ermitteln.

### Offenbarung der Erfindung

Die vorliegende Erfindung betrifft eine Vorrichtung sowie ein Verfahren zur Steuerung eines Motors eines Zweirads sowie ein Zweirad, welches eine derartige entsprechende Vorrichtung aufweist. Dabei ist vorgesehen, dass das Zweirad, z.B. ein Fahrrad, sowohl mittels eines Kurbeltriebs bzw. Pedalen und Muskelkraft aber auch mittels eines Motors angetrieben werden kann. Weiterhin ist vorgesehen, dass das Zweirad ein Erfassungsmittel aufweist, mit dem über eine die Neigung repräsentierende Neigungsgröße die Schräglage des Zweirads erfasst wird. Ausgehend von der erfassten Neigungsgröße ist nachfolgend eine Steuerung des Motors des Zweirads vorgesehen. Erfindungsgemäß ist dabei vorgesehen, dass der Motor nicht nur zur Fortbewegung des Zweirads eingesetzt werden kann sondern in Abhängigkeit von der Neigungsgröße auch über eine entsprechende Verbindung die Bewegung des Kurbeltriebs beeinflusst.

Der besondere Vorteil bei dieser Ausgestaltung liegt darin, dass bei einer Schräglage des Zweirads die Bewegung des Kurbeltriebs, d.h. des manuellen Antriebs beeinflusst werden kann, so dass unbeabsichtigte und ggf. problematische Eingriffe des Fahrers verhindert oder zumindest abgeschwächt werden können.

Die Beeinflussung der Kurbeltriebs bzw. der mit der Tretachse verbundenen Tretarme kann vorteilhafterweise vorgesehen sein, falls ein kritischer Wert der Schräglage erkannt wird. Somit wird verhindert, dass ein Eingriff in die Bewegung des Kurbeltriebs auch bei unkritischen Kurvenfahrten vorgenommen wird.

Besonders vorteilhaft wird die vorstehende Erfindung dann eingesetzt, wenn durch die Neigung des Zweirads in einer Kurvenfahrt zu befürchten ist, dass die Pedale auf der Fahrbahn bzw. dem Untergrund aufsitzt oder schleift. In diesem Fall könnte die Pedal sich auch in Gegenständen auf der Fahrbahn verhaken und somit einen Unfall produzieren. Vor diesem Hintergrund ist vorgesehen, dass durch den Eingriff des Motors die Bewegung des Kurbeltriebs zumindest gehemmt bzw. blockiert wird, um z.B. die kurveninnere Pedale möglichst weit vom Untergrund wegzuhalten. Dabei kann besonders vorgesehen sein, dass der Motor ein Gegenmoment aufbringt, so dass der Fahrer die Pedale nicht weiter oder nur schwer drehen bzw. bewegen kann.

In einer Ausgestaltung der Erfindung übt der Motor derart eine Kraft auf den Kurbeltrieb aus, dass die Tretkurbel bzw. die Pedale am Kurbeltrieb auf der geneigten Seite des Zweirads vom unteren Umkehrpunkt wegbewegt wird, ggf. entgegen der vom Fahrer aufgebrachten Trittkraft. Optional oder alternativ kann auch vorgesehen sein, dass durch die vom Motor aufgebrachte Kraft die Bewegung der Tretkurbel auf den unteren Umkehrpunkt zu verhindert wird, ebenfalls u.U. entgegen der vom Fahrer aufgebrachten Trittkraft.

Um die Bewegung des Kurbeltriebs durch den Motor und somit die Stellung der Pedale in der Schräglage, bspw. in einer Kurvenfahrt, besser koordinieren zu können, kann vorgesehen sein, dass der Kurbeltrieb einen Sensor aufweist, mit dem die Stellung der Tretkurbel bzw. des Pedals erfasst werden kann.

Zur Erfassung der Neigung und somit der Schräglage des Zweirads können u.a. Neigungssensoren, Drehratensensoren oder Beschleunigungssensoren verwendet werden. Besonders vorteilhaft ist die Verwendung von Sensorsignalen, die die Neigung des Zweirads anzeigen und für andere Aufgaben bei der Steuerung des Zweirads verwendet werden, bspw. bei der Anfahrhilfe eines Pedelecs.

Weitere Vorteile ergeben sich aus der nachfolgenden Beschreibung von Ausführungsbeispielen bzw. aus den abhängigen Patentansprüchen.

### Kurze Beschreibung der Zeichnungen

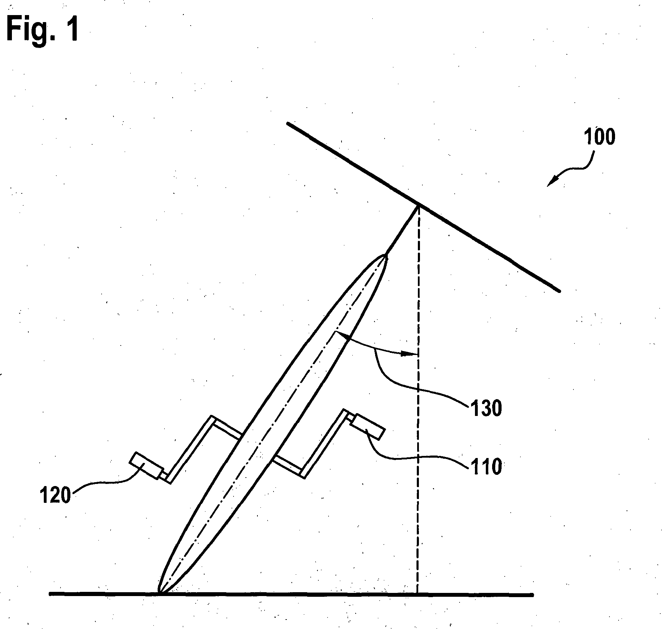

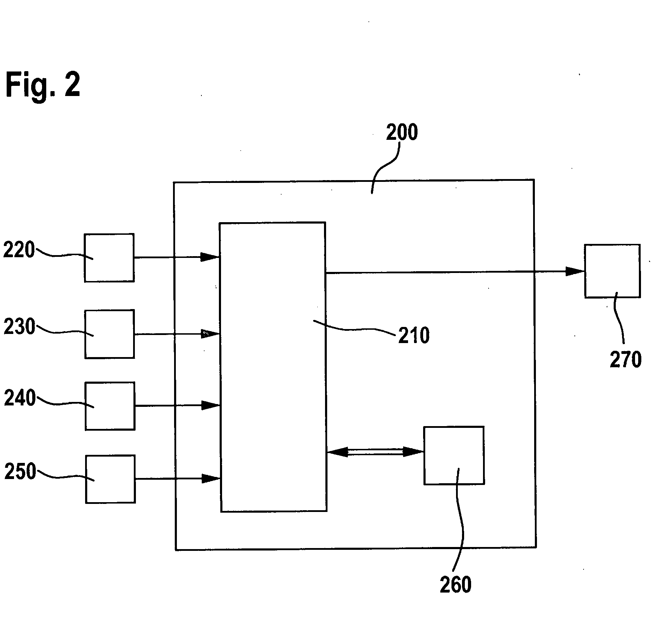

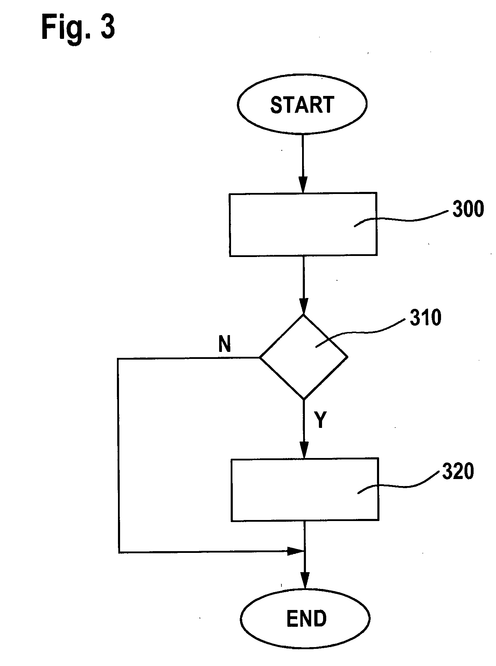

In der Figur 1 wird schematisch eine Kurvenfahrt eines Fahrrads gezeigt, die die erfindungsgemäße Steuerung des am Fahrrad befindlichen Motors auslöst. Das Blockschaltbild der Figur 2 zeigt eine mögliche Ausgestaltung der Erfindung während in Figur 3 der Ablauf des erfindungsgemäßen Verfahrens dargestellt wird.

### Ausführungsformen der Erfindung

Gerade bei ungeübteren Fahrradfahrern kommt es vor, dass in Kurvenfahrten das kurveninnere Pedal nach unten zum unteren Umkehrpunkt gedrückt wird, um einen besseren Stand zu haben. Die sich so ergebende Pedalanordnung ist jedoch gerade bei der Schräglage des Fahrrads problematisch, da dabei das Risiko besteht, dass das Pedal auf dem Untergrund schleift und ggf. auch aufsitzt.

Zur Abhilfe wird gemäß der vorliegenden Erfindung der Motor eines motorgetriebenen Fahrrads dazu genutzt, die Pedale in eine für die Kurvenfahrt günstigere Position zu bringen. In der Figur 1 ist ein Fahrrad 100 während einer Kurvenfahrt gezeigt, welches sich gegenüber der senkrechten um den Winkel 130 neigt. Zur Vermeidung eines Aufsetzens der kurveninnere Pedalen 110 auf der Fahrbahn ist vorgesehen, dieses Pedal 110 möglichst in die Nähe des oberen Umkehrpunkts bzw. das kurvenäußere Pedal 120 weitestgehend zum unteren Umkehrpunkt zu befördern.

Um die Bewegung der Pedalen 110 und 120 zu ermöglichen, ist vorgesehen, zwischen dem Motor des motorangetriebenen Fahrrads 100 und dem Kurbeltrieb eine mechanische Verbindung zu schaffen, so dass der Motor bei entsprechender Ansteuerung auch den Kurbeltrieb und somit die Tretarme mit den Pedalen 110 und 120 zu bewegen. Dies kann beispielsweise dadurch geschehen, dass die Verbindung nur für die Beeinflussung der Bewegung des Kurbelbetriebs hergestellt wird und ansonsten beide Elemente (Kurbeltrieb und Motor) unabhängig voneinander bewegt werden können.

In der Figur 2 ist eine Vorrichtung zur Steuerung des Motors eines motorangetriebenen Fahrrads 100 entsprechend der Erfindung vorgenommen werden kann. Ausgehend von einer Steuereinheit 200, in dem eine Verarbeitungseinheit 210 und ein Speicher 260 vorgesehen sind, kann ein Signal erfasst werden, aus dem die Neigung bzw. die Schräglage des Fahrrads abgeleitet werden. Zur Ermittlung der Schräglage kann dabei u.a. ein Neigungssensor 220, ein oder mehrere Drehratensensoren 230 oder ein Beschleunigungssensor 240 verwendet werden.

Ausgehend von einem oder mehreren Sensorsignalen wird in der Verarbeitungseinheit 210 überprüft, ob die Neigung des Fahrrads über einen z.B. in einem Speicher 260 hinterlegten und ggf. für das Fahrrad individuellen Schwellenwert hinaus erreicht ist. Sollte die Neigung diesen Schwellenwert übersteigen, wird der Motor 270 des Fahrrads derart angesteuert, dass er die Bewegung des Kurbeltriebs bzw. der Pedalen 110 und 120 durch den Fahrer hemmt oder sogar blockiert, um zu verhindern, dass das kurveninnere Pedal 110 in die Nähe des unteren Umkehrpunkts kommt. Optional kann auch vorgesehen sein, dass der Motor 270 derart angesteuert wird, dass eine zusätzliche Kraft erzeugt wird, die das Pedal 110 gerade aus dem Bereich des unteren Umkehrpunkts heraus bewegt und im Idealfall in den oberen Umkehrpunkt dreht. Dort kann dann eine Gegenkraft erzeugt werden, die die manuelle Trittkraft des Fahrers auf die Pedal kompensiert oder das Treten zumindest erschwert. Richtet sich das Fahrrad wieder auf, kann diese Beeinflussung des Kurbeltriebs beendet werden.

Optional kann auch ein Pedalsensor 250 vorgesehen sein, der die Lage der Pedalen 110 und 120 erfasst. Mit der so vorliegenden Information über die Pedalstellung kann der Motor und somit die Beeinflussung bzw. Bewegung des Kurbeltriebs optimierter angesteuert werden.

Mit dem Flussdiagramm der Figur 3 soll das Verfahren zur Erkennung einer kritischen Schräglage des Fahrrads und zur Ansteuerung des Motors 270 des Fahrrads verdeutlicht werden. Nach dem Start des Verfahrens wird in einem ersten Schritt 300 eine Sensorgröße erfasst, die die Neigung des Fahrrads erfasst. Neben der direkten Verwendung des Signals eines Neigungssensors 220 können jedoch auch andere Sensorsignale verwendet werden, aus denen die Neigung abgeleitet werden. Wie vorstehend bereits ausgeführt, können hierzu Drehratensensoren oder Beschleunigungssensoren herangezogen werden. Aus den so erhaltenen Sensorsignalen lässt sich auf bekannte Weise der Neigungswinkel errechnen. Liegt dieser so direkt bestimmte oder abgeleitete Neigungswinkel über einem kritischen Schräglagenwinkel, kann es bei einer ungünstigen Stellung des kurveninneren Pedals, z.B. im Bereich des unteren Umkehrpunkts, zu einem Schleifen oder Aufsetzen auf die Fahrbahnoberfläche kommen, so dass Gegenmaßnahmen eingeleitet werden müssen. Zu diesem Zweck wird im zweiten Schritt 320 überprüft, ob der Neigungswinkel über dem kritischen Schwellenwert liegt. Ist die Neigung noch akzeptabel, d.h. besteht kein Risiko des Auftreffens des Pedals auf die Fahrbahnoberfläche, wird das Verfahren beendet. Ansonsten wird in Schritt 320 die Ansteuerung des Motors 270 gestartet, um das Pedal entweder aus dem Bereich des unteren Umkehrpunkts heraus zubewegen oder die Bewegung des Kurbeltriebs zu hemmen bzw. zu blockieren, um eine Bewegung weg vom oberen Umkehrpunkt zu erschweren oder zu verhindern. Nach der Ansteuerung des Motors kann das Verfahren beendet werden oder zur Abfrage des Neigungswinkels in Schritt 300 verzweigt werden.

In einer weiteren Ausführung der Erfindung kann zusätzlich auch die Trittkraft des Fahrers bei der Ansteuerung des Motors zur Erzeugung der Bewegung der Tretkurbel berücksichtigt werden, um ungewollte Bewegungsabläufe beim Fahrer zu vermeiden. So ist beispielsweise zu verhindern, dass ein durchgestrecktes Bein für den Fahrer unvermittelt gebeugt wird, indem der Motor das Pedal aus dem unteren Umkehrpunkt in den oberen Umkehrpunkt bewegt.

## Patentansprüche

1. Vorrichtung zur Steuerung eines Motors eines Zweirads, wobei vorgesehen ist, dass das Zweirad (100)
• mittels des Motors (270) antreibbar ist und
• einen Kurbeltrieb zum Antreiben des Fahrrads (100) mittels Muskelkraft aufweist, und
• wenigstens ein Erfassungsmittel (220, 230, 240) aufweist, mittels dem eine Neigungsgröße (130) erfasst werden kann, die die Schräglage des Zweirads repräsentiert,
wobei vorgesehen ist, dass der Motor in Abhängigkeit der Neigungsgröße (130) angesteuert werden kann,
**dadurch gekennzeichnet, dass**
eine Verbindung zwischen Motor und Kurbeltrieb vorgesehen ist, so dass in Abhängigkeit der Neigungsgröße (130) die Bewegung des Kurbeltriebs durch den Motor (270) beeinflusst werden kann.

2. Vorrichtung nach Anspruch 1, **dadurch gekennzeichnet, dass** die Bewegung des Kurbeltriebs bei Überschreiten eines Schwellenwerts durch die Neigungsgröße (130) beeinflusst wird.

3. Vorrichtung nach Anspruch 1 oder 2, **dadurch gekennzeichnet, dass** der Motor (270) die Bewegung des Kurbeltriebs zumindest hemmt, insbesondere blockiert.

4. Vorrichtung nach Anspruch 1 oder 2, **dadurch gekennzeichnet, dass** der Motor (270) ein Gegenmoment zur Bewegung des Kurbeltriebs erzeugt.

5. Vorrichtung nach einem der vorhergehenden Ansprüche, **dadurch gekennzeichnet, dass** der Motor (270) eine Kraft auf den Kurbeltrieb ausübt, die die Tretkurbel bzw. die Pedale (110) am Kurbeltrieb auf der geneigten Seite des Zweirads (100) vom unteren Umkehrpunkt wegbewegt bzw. verhindert, dass die Tretkurbel bzw. die Pedale (110) auf den unteren Umkehrpunkt zubewegt wird.

6. Vorrichtung nach Anspruch 5, **dadurch gekennzeichnet, dass** der Kurbeltrieb einen Sensor (250) aufweist, mittels dem die Stellung der Tretkurbel bzw. des Pedals (110) erfasst werden kann.

7. Vorrichtung nach einem der vorhergehenden Ansprüche, **dadurch gekennzeichnet, dass** zur Erfassung der Neigungsgröße wenigstens ein Neigungssensor (220), ein Drehratensensor (230) oder ein Beschleunigungssensor (230) vorgesehen ist.

8. Zweirad, insbesondere Fahrrad, mit einer Vorrichtung zur Steuerung eines Motors (270) des Zweirads (100) nach einem der Ansprüche 1 bis 7, wobei vorgesehen ist, dass das Zweirad (100)
• mittels des Motors (270) und/oder mittels Muskelkraft über einen Kurbeltrieb antreibbar ist und
• wenigstens ein Erfassungsmittel (220, 230, 240) aufweist, mittels dem eine Neigungsgröße (130) erfasst werden kann, die die Schräglage des Zweirads repräsentiert,
wobei vorgesehen ist, dass der Motor in Abhängigkeit der Neigungsgröße (130) angesteuert werden kann,
**dadurch gekennzeichnet, dass**
eine Verbindung zwischen Motor (270) und Kurbeltrieb vorgesehen ist, mittels der eine Beeinflussung der Bewegung der Kurbeltriebs durch den Motor (270) erfolgen kann, wobei diese Beeinflussung in Abhängigkeit von der Neigungsgröße (130) erfolgt.

9. Zweirad nach Anspruch 8, **dadurch gekennzeichnet, dass** der Motor (270) als Mittelmotor ausgestaltet ist, insbesondere im Bereich der Tretkurbel.

10. Verfahren zur Steuerung eines Motors eines Zweirads, insbesondere eines Fahrrads, wobei
• eine Neigungsgröße (130) des Zweirads (100) erfasst wird, die die Schräglage des Zweirads repräsentiert, und
• der Motor (270) in Abhängigkeit der Neigungsgröße (130) angesteuert wird,
**dadurch gekennzeichnet, dass**
der Motor (270) derart angesteuert wird, dass er die Bewegung eines mit dem Motor (270) verbundenen Kurbeltriebs in Abhängigkeit der Neigungsgröße (130) beeinflusst.

11. Verfahren zur Steuerung eines Motors eines Zweirads nach Anspruch 10, **dadurch gekennzeichnet, dass** die Stellung der am Kurbeltrieb befindlichen Tretkurbel bzw. Pedale (110) erfasst wird und der Motor (270) derart angesteuert wird, dass die Tretkurbel bzw. die Pedale (110) auf der geneigten Seite des Zweirads (100) in eine vom unteren Umkehrpunkt entfernte Position gebracht oder in einer derartigen Position gehalten wird.

## Claims

1. Device for controlling a motor of a two-wheeled vehicle, wherein it is provided that the two-wheeled vehicle (100)
• can be driven by means of the motor (270), and
• has a crank drive for driving the bicycle (100) by means of muscle force, and
• has at least one detection means (220, 230, 240) by means of which an inclination variable (130), which represents the inclined position of the two-wheeled vehicle, can be detected,
wherein it is provided that the motor can be actuated as a function of the inclination variable (130), **characterized in that**
a connection is provided between the motor and the crank drive, with the result that the movement of the crank drive can be influenced by the motor (270) as a function of the inclination variable (130).

2. Device according to Claim 1, **characterized in that** the movement of the crank drive is influenced by the inclination variable (130) when a threshold value is exceeded.

3. Device according to Claim 1 or 2, **characterized in that** the motor (270) at least impedes, in particular blocks, the movement of the crank drive.

4. Device according to Claim 1 or 2, **characterized in that** the motor (270) generates a counter-torque with respect to the movement of the crank drive.

5. Device according to one of the preceding claims, **characterized in that** the motor (270) applies a force to the crank drive, which force moves the pedal crank or the pedals (110) on the crank drive on the inclined side of the two-wheeled vehicle (100) away from the lower reversal point or prevents the pedal crank or the pedals (110) moving towards the lower reversal point.

6. Device according to Claim 5, **characterized in that** the crank drive has a sensor (250) by means of which the position of the pedal crank or of the pedal (110) can be detected.

7. Device according to one of the preceding claims, **characterized in that** at least one inclination sensor (220), one rotational speed sensor (230) or one acceleration sensor (230) is provided for detecting the inclination variable.

8. Two-wheeled vehicle, in particular a bicycle, having a device for controlling a motor (270) of the two-wheeled vehicle (100) according to one of Claims 1 to 7, wherein it is provided that the two-wheeled vehicle (100)
• can be driven by means of the motor (270) and/or by means of muscle force via a crank drive, and
• has at least one detection means (220, 230, 240) by means of which an inclination variable (130), which represents the inclined position of the two-wheeled vehicle, can be detected,
wherein it is provided that the motor can be actuated as a function of the inclination variable (130), **characterized in that**
a connection is provided between the motor (270) and the crank drive, by means of which connection the movement of the crank drive can be influenced by the motor (270), wherein this influence occurs as a function of the inclination variable (130).

9. Two-wheeled vehicle according to Claim 8, **characterized in that** the motor (270) is configured as a mid-mounted motor, in particular in the region of the pedal crank.

10. Method for controlling a motor of a two-wheeled vehicle, in particular of a bicycle, wherein
• an inclination variable (130) of the two-wheeled vehicle (100), which represents the inclined position of the two-wheeled vehicle, is detected, and
• the motor (270) is actuated as a function of the inclination variable (130),
**characterized in that**
the motor (270) is actuated in such a way that it influences the movement of a pedal crank, connected to the motor (270), as a function of the inclination variable (130).

11. Method for controlling a motor of a two-wheeled vehicle according to Claim 10, **characterized in that** the position of the pedal crank or pedals (110) located on the crank drive is detected, and the motor (270) is actuated in such a way that the pedal crank or the pedals (110) on the inclined side of the two-wheeled vehicle (100) is/are moved into a position which is remote from the lower reversal point or is/are held in such a position.

## Revendications

1. Dispositif destiné à commander un moteur d'un deux-roues, dans lequel il est fait en sorte que le deux-roues (100)
- puisse être entraîné au moyen du moteur (270) et
- comprenne un mécanisme de pédalier destiné à entraîner la bicyclette (100) au moyen d'une force musculaire, et
- comprenne au moins un moyen de détection (220, 230, 240) au moyen duquel un degré d'inclinaison (130), qui représente la position inclinée du deux-roues, peut être détecté,
dans lequel il est fait en sorte que le moteur puisse être commandé en fonction du degré d'inclinaison (130), **caractérisé en ce qu'**il est prévu une liaison entre le moteur et le pédalier de manière à ce que le mouvement du pédalier puisse subir l'influence du moteur (270) en fonction du degré d'inclinaison (130).

2. Dispositif selon la revendication 1, **caractérisé en ce que** le mouvement du mécanisme de pédalier est soumis à l'influence du degré d'inclinaison (130) lorsqu'un seuil est dépassé.

3. Dispositif selon la revendication 1 ou 2, **caractérisé en ce que** le moteur (270) fait au moins en sorte d'inhiber et plus particulièrement, bloque le mouvement du mécanisme de pédalier.

4. Dispositif selon la revendication 1 ou 2, **caractérisé en ce que** le moteur (270) génère un couple opposé au mouvement du mécanisme de pédalier.

5. Dispositif selon l'une quelconque des revendications précédentes, **caractérisé en ce que** le moteur (270) exerce sur le mécanisme de pédalier une force qui éloigne le pédalier ou la pédale (110) se trouvant sur le mécanisme de pédalier du point d'inversion inférieur ou l'empêche de l'atteindre, du côté approprié du deux-roues (100), de manière à ce que le pédalier ou la pédale (110) soit ramené au point d'inversion inférieur.

6. Dispositif selon la revendication 5, **caractérisé en ce que** le mécanisme de pédalier comprend un capteur (250) au moyen duquel la position du pédalier ou de la pédale (110) peut-être détectée.

7. Dispositif selon l'une quelconque des revendications précédentes, **caractérisé en ce qu'**il est prévu au moins un capteur d'inclinaison (220), un capteur de vitesse de rotation (230) ou un capteur d'accélération (230) pour détecter le degré d'inclinaison.

8. Deux-roues, notamment, bicyclette, comportant un dispositif destiné à commander un moteur (270) du deux-roues (100) selon l'une quelconque des revendications 1 à 7, dans lequel il est fait en sorte que le deux-roues (100)
- puisse être entraîné par le moteur (270) et/ou au moyen d'une force musculaire par l'intermédiaire d'un mécanisme de pédalier et
- comprenne au moins un moyen de détection (220, 230, 240) au moyen duquel un degré d'inclinaison (130), qui représente la position d'inclinaison du deux-roues, peut être détecté,
dans lequel il est fait en sorte que le moteur puisse être commandé en fonction du degré d'inclinaison (130), **caractérisé en ce qu'**il est prévu une liaison entre le moteur (270) et le mécanisme de pédalier au moyen de laquelle une influence sur le mouvement du mécanisme de pédalier peut être exercée par le moteur (270), dans lequel ladite influence s'exerce en fonction du degré d'inclinaison (130).

9. Deux-roues selon la revendication 8, **caractérisé en ce que** le moteur (270) est réalisé sous la forme d'un moteur central, notamment situé dans la région du mécanisme de pédalier.

10. Procédé destiné à commander un moteur d'un deux-roues, notamment d'une bicyclette, dans lequel
- un degré d'inclinaison (130) du deux-roues (100), qui représente la position d'inclinaison du deux-roues, est détecté, et
- le moteur (270) est commandé en fonction du degré d'inclinaison (130),
**caractérisé en ce que** le moteur (270) est commandé de manière à influencer le mouvement d'un mécanisme de pédalier relié au moteur (270) en fonction du degré d'inclinaison (130).

11. Procédé destiné à commander un moteur d'un deux-roues selon la revendication 10, **caractérisé en ce que** la position du pédalier ou de la pédale (110) se trouvant sur le mécanisme de pédalier est détectée et **en ce que** le moteur (270) est commandé de manière à ce que le pédalier ou la pédale (110), du côté approprié du deux-roues (100), soit amené à une position éloignée du point d'inversion inférieur ou soit maintenu à une telle position.
